# EUROPEAN PATENT SPECIFICATION

(11) **EP 3 617 665 B1**
(45) Date of publication and mention of the grant of the patent: **19.08.2020**
(21) Application number: 19161815.6
(22) Date of filing: 11.03.2019
(51) Int. Cl.: G01F 1/66, G01F 15/14, G01F 1/708

(54) **ULTRASONIC FLOW METER**
ULTRASCHALLFLUSSMESSER
DÉBITMÈTRE ULTRASONIQUE

(30) Priority: 29.08.2018 EP 18191355
(43) Date of publication of application: 04.03.2020
(73) Proprietor: HUBA CONTROL AG, 5436 Würenlos (CH)
(72) Inventor: Anliker, Peter, 5024 Küttigen (CH); Menzi, Stefan, 8038 Zürich (CH)
(74) Representative: Maier, Daniel Oliver

(56) References cited:
- EP-A1- 2 336 732
- EP-A1- 2 423 648
- EP-A1- 3 199 923
- EP-A2- 0 708 313
- WO-A1-2014/029405
- US-A1- 2006 022 680
- US-B2- 8 893 559

## Description

### Background

The present disclosure relates to an ultrasonic flow meter. More particularly, the present disclosure focuses on a flow meter with a first and with a second ultrasound transducer.

Flow meters such as ultrasonic flow meters are commonly employed to record flow signals in appliances for heating, ventilation and/or air conditioning. A flow meter may, for instance, record flow of a fluid such as water or glycol through a flux calorimeter. A quantity indicative of heat transfer can then be derived from the recorded flow and from additional measurements of temperature. Ultrasonic flow meters are also employed to record flow of transformer oil circulating through the ducts of power transformers. A recorded flow value can then be used to adjust speeds of oil pumps while the power transformer is in oil directed and air forced cooling mode.

A European patent application EP0890826A1 was filed on 8 July 1998 and was published on 13 January 1999. EP0890826A1 teaches an ultrasonic flow meter. The flow meter of EP0890826A1 comprises a first 11 and a second ultrasonic transducer 12. The transducers 11, 12 are mounted at different positions along the flow path through an enclosure 1. The first transducer 11 is mounted downstream 15 of the second transducer 12. A plurality of reflectors 13, 14 defines a path for propagation of ultrasonic signals from the first transducer 11 to the second transducer 12.

An application EP2270439A1 for a European patent was filed on 3 July 2009 and was published on 5 January 2011. The patent application EP2270439A1 discloses a flow meter comprising a moulded reflector unit and a method for making the flow meter. The flow meter of EP2270439A1 comprises a pair of reflectors 612, 614. The reflectors 612, 614 are mounted on either side of a measuring tube 602 using brackets 616, 618. The brackets 616, 618 extend away from the measuring tube 602 thereby mounting the reflectors 612, 612 outside the tube.

An international application WO2014/029405A1 was filed on 22 August 2013 and was published on 27 February 2014. WO2014/029405A1 teaches an ultrasonic flow meter comprising a connection arrangement. The flow meter according to WO2014/029405A1 comprises a pair of ultrasonic transducers 6, 7. Three ultrasonic reflectors 8, 9, 10 are fitted into depressions in a guide element 52 inside a meter housing 2. The ultrasonic reflectors 8, 9, 10 provide a path for propagation of ultrasonic signals between the ultrasonic transducers 6, 7.

On 21 July 2014, another international application WO2016/012024A1 was filed. The same application was published on 28 January 2016. WO2016/012024A1 deals with a flow conduit insert for an ultrasonic flow meter. A plurality of fixation elements (FE) is provided inside a flow conduit (FC). The fixation elements (FE) each have a maximum dimension not exceeding 80% of the diameter of the flow conduit (FC). Preferably the fixation elements (FE) each have a diameter not exceeding 70% of the diameter of the flow conduit (FC). Even more preferably the fixation elements (FE) each have a diameter not exceeding 50% of the diameter of the flow conduit (FC).

A European patent application EP0708313A2 was filed on 20 October 1995. The application was published on 24 April 1996. EP0708313A2 teaches an ultrasonic flow meter. The flow meter of EP3199923A1 comprises a three reflectors 9, 10, 11 as well as a pair of ultrasonic transducers 5, 6.

On 26 January 2016, a European patent application EP3199923A1 was filed. The application was published on 2 August 2017. EP3199923A1 teaches an ultrasonic flow meter. The flow meter of EP3199923A1 also comprises a three reflectors 12a, 12b, 12c. The reflectors 12a, 12b, 12c are mounted to an inner wall (11) of the meter. An ultrasonic absorber 8 is mounted opposite the central reflector 12c.

The present disclosure improves on ultrasonic flow meters. The instant disclosure confers advantages in terms of more accurate measurements of flow rates.

### Summary

The present disclosure provides a flow meter for determining the flow of a fluid through a flow channel. The flow meter harnesses a pair of ultrasonic transducers and a plurality of reflectors. The ultrasonic transducers in combination with the reflectors define a W-shaped ultrasonic signal path through the flow channel. The flow meter also provides a flow restriction member in between the two outermost reflectors. The flow restriction member narrows the flow channel. Inhibition an expansion of the fluid path in the vicinity of the flow restriction member yields improvements on linearity. Also, higher flow velocities narrow active cross-sections of a fluid flowing through the fluid path. In addition, they render the active cross-section more homogeneous as a function of flow velocity. That is, a higher flow velocity in the vicinity of the W-shaped ultrasonic signal path yields improvements on signal quality. A measurement thus becomes more accurate.

A flow meter is thus provided, the flow meter comprising: a housing and a flow channel arranged inside the housing; two ultrasonic transducers disposed along the flow channel and arranged at a distance from one another, wherein the first ultrasonic transducer is configured to emit an ultrasonic signal into the flow channel and the second ultrasonic transducer is configured to receive the ultrasonic signal emitted by the first ultrasonic transducer; three reflectors arranged inside the flow channel, the three reflectors being configured to reflect the ultrasonic signal emitted by the first ultrasonic transducer multiple times on its way to the second ultrasonic transducer such that a W-shaped path of the ultrasonic signal is formed; wherein the flow channel is formed by a tubular member inside the housing; wherein the tubular member comprises a wall having an inner surface, the reflectors being arranged on the inner surface of the wall; wherein the wall comprises at least one aperture, the at least one aperture perforating the wall and being configured for insertion of at least one of the reflectors into the tubular member; and wherein the flow channel comprises a flow restriction member and an outlet port having a first diameter dimension, the flow restriction member being interposed between two out of the three reflectors; wherein the flow channel has a second diameter dimension at the flow restriction member; and wherein the second diameter dimension is less than 60% of the first diameter dimension. Also, the W-shaped path of the ultrasonic signal defines a plane; the flow restriction member has a profile in the plane defined by the W-shaped path; the profile of the flow restriction member comprises an arcuate segment; the arcuate segment has a first end and a second end, the second end being disposed opposite the first end, and an arc length dimension between the first end and the second end; and the arc length dimension is at least half the first diameter dimension.

It is also an object of the present disclosure to provide a flow meter that is suitable for manufacture at large scale.

It is another object of the instant disclosure to provide a flow meter that is mechanically robust.

It is another object of the instant disclosure to provide a flow meter wherein the W-shaped ultrasonic path can be configured from outside the flow channel.

It is yet another object of the present disclosure to provide a flow meter wherein the flow restriction member is an integral part of the flow channel, thereby reducing complexity during manufacture.

It is yet another object of the present disclosure to provide a flow meter wherein the flow restriction member is ideally positioned with respect to the W-shaped ultrasonic signal path.

It is still an object of the present disclosure to provide a flow meter that includes a signal processor such that a measured value of a flow rate can be readily delivered to an operator.

It is still another object of the present disclosure to provide a flow meter with few components such that the arrangement becomes less prone to failure.

### Brief description of the drawings

Various features will become apparent to those skilled in the art from the following detailed description of the disclosed non-limiting embodiments. The drawings that accompany the detailed description can be briefly described as follows:
FIG 1 schematically illustrates a flow meter according to the present disclosure.
FIG 2 schematically illustrates a tubular member employed in the flow meter of the instant disclosure.
FIG 3 illustrates additional details concerning diameters and ports.
FIG 4 shows a flow meter operated by a controller.
FIG 5 illustrates a trapezoidal flow restriction member, not being part of the present invention.

### Detailed decription

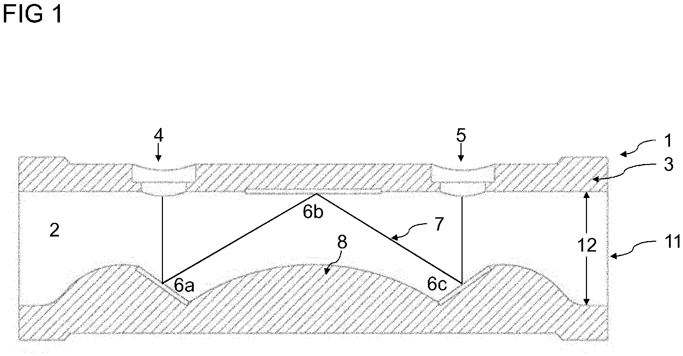

A flow meter 1 according to the present disclosure is shown on FIG 1. It is common to employ such flow meters 1 to estimate and/or determine flow in ducts of an installation for heating, ventilation, and/or air conditioning. Flow meters according to the instant disclosure may also be used to estimate and/or determine oil flow through cooling ducts of power transformers.

The flow meter 1 comprises a flow channel 2 arranged inside a housing 3. The flow channel 2 generally enables flow of a fluid such as water, glycol, mixtures of water and of glycol, oil, in particular transformer oil, etc. The skilled person chooses a material for the walls of the flow channel 2 that is suitable in view of the type of fluid. The skilled person also selects a material that is compatible with typical temperatures inside the flow channel 2.

In an embodiment, the housing 3 is made of a metallic material such as steel, in particular austenitic (stainless) steel or ferrite steel. In an alternate embodiment, the housing 3 is made of aluminum (alloy) or gunmetal or brass. In yet another alternate embodiment, the housing 3 is made of a polymeric material. According to an aspect, the housing 3 is manufactured via an additive manufacturing technique such as three-dimensional printing. Manufacture of the housing 3 may, in particular, involve selective laser sintering.

According to an aspect of the present disclosure, the flow channel 2 is or comprises a polymeric member. It is also envisaged that manufacture of the flow channel 2 involves additive manufacturing such as three-dimensional printing. Manufacture of the flow channel 2 may, in particular, involve selective laser sintering.

The flow channel 2 may, by way of non-limiting example, be polymeric or comprise a polymeric member, the polymer being selected from at least one of:
- an epoxy polymer, or
- a polytetrafluoroethylene, or
- a polyethylene polymer, or
- a polyethylene terephthalate polymer, or
- a polyester polymer, or
- a blended form thereof.

The skilled person chooses a material such as a polymer that absorbs ultrasonic waves. That is, the skilled person chooses a material with an acoustic impedance that matches the acoustic impedance of the fluid in the flow channel 2.

According to an aspect, the flow channel 2 is a cylindrical part or a substantially cylindrical part.

Two ultrasonic transducers 4, 5 are mounted to the housing 3. The housing 3 may, in an embodiment, provide ports that receive ultrasonic transducers 4, 5. The ultrasonic transducers 4, 5 are arranged at a distance. That is, one ultrasonic transducer 4 is arranged upstream of the other ultrasonic transducer 5. An upstream direction inside the flow channel 2 is defined by a direction of fluid flow through the flow channel 2. In an embodiment, the ultrasonic transducers 4, 5 are spaced at least 20 mm apart. The ultrasonic transducers 4, 5 may also be spaced at least 50 mm apart or even at least 100 mm apart. Long distances between ultrasonic transducers can improve on accuracy.

In an embodiment, the ultrasonic transducer 4 is an ultrasonic emitter as well as an ultrasonic receiver. In an alternate embodiment, the ultrasonic transducer 4 exclusively emits ultrasonic signals but does not receive such signals. In an embodiment, the ultrasonic transducer 5 is an ultrasonic emitter as well as an ultrasonic receiver. In an alternate embodiment, the ultrasonic transducer 5 exclusively receives ultrasonic signals but does not emit such signals. Flow meters 1 with ultrasonic transducers 4, 5 with limited capabilities confer advantages in terms of reduced complexity and cost.

The ultrasonic transducers 4, 5 ideally operate at frequencies above 200 kHz. According to a particular aspect, the ultrasonic transducers 4, 5 operate at frequencies larger than 500 kHz or even larger than 1 MHz. Larger frequencies generally reduce interface by other sources of ultrasonic signals.

It is envisaged that the ultrasonic transducer 4 is a piezoelectric transducer. It is also envisaged that the ultrasonic transducer 4 is a capacitive transducer. It is envisaged that the ultrasonic transducer 5 is a piezoelectric transducer. It is also envisaged that the ultrasonic transducer 5 is a capacitive transducer. The two transducers 4, 5 preferably employ the same measurement principle. That is, the two transducers 4, 5 are either both piezoelectric transducers or are both capacitive transducers.

The flow meter 1 comprises three reflectors 6a, 6b, 6c arranged inside the flow channel 2. A reflector 6a is preferably arranged in the flow channel 2 opposite the ultrasonic transducer 4. Preferably another reflector 6c is arranged in the flow channel 2 opposite the ultrasonic transducer 5. The flow meter 1 comprises yet another reflector 6b. This reflector 6b is advantageously arranged at or near the centre between the ultrasonic transducers 4, 5. That is, the reflector 6b is arranged in the middle between the ultrasonic transducers 4, 5.

The reflectors 6a, 6b, 6c together with the ultrasonic transducers 4, 5 define a W-shaped signal path 7. As the ultrasonic transducer 4 emits an ultrasonic signal, the same signal propagates through the flow channel 2 to the reflector 6a. The ultrasonic signal is then reflected by reflector 6a toward reflector 6b. After reflection at reflector 6b, the ultrasonic signal propagates through the flow channel 2 toward reflector 6c. At reflector 6c the ultrasonic signal is finally reflected toward ultrasonic transducer 5 and received by ultrasonic transducer 5.

In an alternate embodiment, the ultrasonic transducer 5 emits an ultrasonic signal. The same signal propagates through the flow channel 2 to the reflector 6c. The ultrasonic signal is then reflected by reflector 6c toward reflector 6b. After reflection at reflector 6b, the ultrasonic signal propagates through the flow channel 2 toward reflector 6a. At reflector 6a the ultrasonic signal is finally reflected toward ultrasonic transducer 4 and received by ultrasonic transducer 4.

The skilled person selects reflectors 6a, 6b, 6c made of or coated with a material that is compatible with the type of fluid inside the flow channel 2. The skilled person also selects reflectors 6a, 6b, 6c made of or coated with a material that is compatible with typical temperatures inside the flow channel 2.

The skilled person chooses a suitable method for mounting the reflectors 6a, 6b, 6c inside the flow channel 2. The reflectors 6a, 6b, 6c are preferably secured to an inner wall of the flow channel 2. The reflectors 6a, 6b, 6c are, more preferably, coupled to or mounted to an inner wall of the flow channel 2. The reflectors 6a, 6b, 6c may, by way of non-limiting example, be glued to an inner wall of the flow channel 2. The reflectors 6a, 6b, 6c may, by way of another non-limiting example, be mounted inside depressions in an inner wall flow channel 2. According to another aspect, at least one of the reflectors 6a, 6b, 6c is mounted inside (a slot of) the flow channel 2 by staking, in particular by heat staking. According to yet another aspect of the instant disclosure, at least one of the reflectors 6a, 6b, 6c is mounted inside (a slot of) the flow channel 2 by interference fit.

A flow restriction member 8 is arranged between two of the reflectors 6a, 6c. The flow restriction member 8 is preferably arranged between the two outermost reflectors 6a, 6c. That is, the flow restriction member 8 is arranged between the two reflectors 6a, 6b that are closest to the outlet 11 and to the inlet 14 of flow channel 2.

The flow restriction member 8 advantageously is a protrusion and as such protrudes from an inner wall of the flow channel 2. In an alternate embodiment, not part of the present invention, the flow restriction member comprises an orifice arranged inside the flow channel 2. The flow restriction member may, in a particular embodiment, not part of the present invention, comprise an orifice with an adjustable opening cross section.

At the narrowest portion of the flow channel 2, the restriction member 8 preferably narrows the channel 2 to at most 20% of its cross-section at the outlet 11. The restriction member 8 more preferably narrows the flow channel 2 to at most 50% of its cross-section area at the outlet 11. The restriction member narrows the flow channel 2 to at most 60% of its cross-section area at the outlet 11.

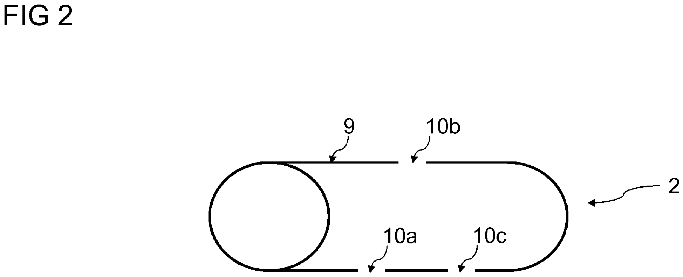

Now referring to FIG 2, a flow channel 2 is shown that comprises a tubular member 9. Apertures 10a, 10b, 10c perforate the walls of the tubular member 9. The apertures 10a, 10b, 10c cooperate with the reflectors 6a, 6b, 6c such that they can receive the reflectors 6a, 6b, 6c. That is, the reflectors 6a, 6b, 6c can be inserted into the flow channel 2 via the apertures 10a, 10b, 10c.

At least one of the apertures 10a, 10b, 10c preferably is a slit. The slit ideally has rectangular shape. The lateral dimensions of the slit can, by way of non-limiting examples, be 1 mm by 2 mm, 1.5 mm by 5 mm, or 2 mm by 10 mm. The apertures 10a, 10b, 10c advantageously are a slits. The slits ideally have rectangular shape. The lateral dimensions of the slits can, by way of non-limiting examples, be 1 mm by 2 mm, 1.5 mm by 5 mm, or 2 mm by 10 mm.

The tubular member 9 provides a first fluid port and a second fluid port, the second fluid port being arranged opposite the first fluid port. A flow axis is defined by the tubular member 9.

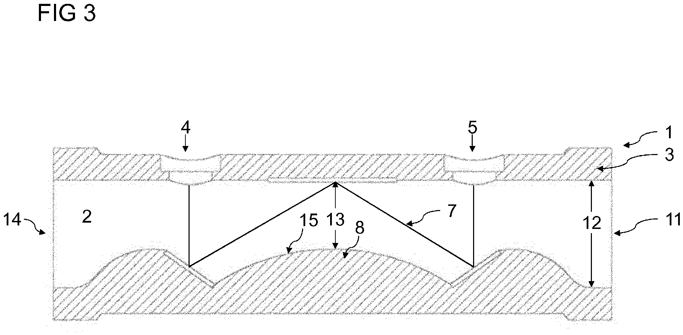

Now turning to FIG 3, a flow meter 1 is shown with an inlet 14 and with an outlet 11. The flow channel 2 has a diameter dimension 12 at or near its outlet 11. The diameter dimension is the minimum diameter dimension 12 between opposite points on the inner wall of the flow channel 2. The flow channel 2 also has a diameter dimension at or near its inlet 14. The diameter dimension at or near the inlet is the minimum diameter dimension between opposite points on the inner wall of the flow channel 2.

It is envisaged that the tubular member 9 shown on FIG 2 has an inlet 14 and an outlet 11. The tubular member 9 has a diameter dimension 12 at or near its outlet 11. The diameter dimension 12 is the minimum diameter dimension between opposite points on the inner wall of the tubular member 9. The tubular member 9 also has a diameter dimension at or near its inlet 14. The diameter dimension at or near the inlet is the minimum diameter dimension between opposite points on the inner wall of the tubular member 9.

FIG 3 depicts a diameter dimension 13 between the arcuate surface 15 of the flow restriction member 8 and the inner wall of flow channel 2. The reflector 6b can, in an embodiment, be mounted at the narrowest portion at or near the flow restriction member 8. That is, the reflector 6b is mounted opposite the (tip of the) flow restriction member 8. The diameter dimension 13 then runs from the arcuate surface 15 of the flow restriction member 8 to the reflector 6b. The diameter dimension 13 in this case is the minimum diameter dimension between opposite points on the arcuate surface 15 and on the reflector 6b.

In an embodiment, not part of the present invention, the diameter dimension 13 at the flow restriction member 8 is less than 90% of the diameter dimension 12 at or near the outlet 11. In another embodiment, not part of the present invention, the diameter dimension 13 at the flow restriction member 8 is less than 80% of the diameter dimension 12 at or near the outlet 11. In yet another embodiment, not part of the present invention, the diameter dimension 13 at the flow restriction member 8 is less than 65% of the diameter dimension 12 at or near the outlet 11. The diameter dimension 13 at the flow restriction member 8 is less than 60% of the diameter dimension 12 at or near the outlet 11.

According to an aspect of the present disclosure, the diameter dimension 13 at the flow restriction member 8 is less than 90% of the diameter dimension at or near the inlet 14. According to another aspect of the present disclosure, the diameter dimension 13 at the flow restriction member 8 is less than 80% of the diameter dimension at or near the inlet 14. According to yet another aspect of the present disclosure, the diameter dimension 13 at the flow restriction member 8 is less than 65% of the diameter dimension at or near the inlet 14.

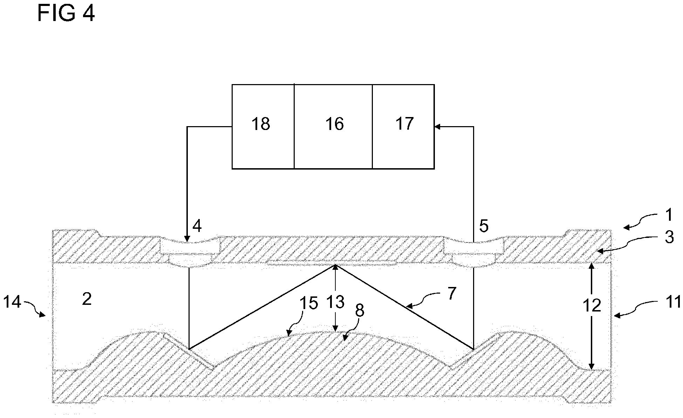

FIG 4 shows a flow meter 1 in cooperation with a controller 16. The controller 16 can, by way of non-limiting example, comprise a microcontroller or a microprocessor. The controller 16 advantageously comprises a memory such as a non-volatile memory. The controller 16 advantageously also comprises an arithmetic logic unit (ALU).

The controller 16 is in operative communication with the ultrasonic transducer 4. In an embodiment, a two-wire lead is employed to couple the controller 16 and the ultrasonic transducer 4. In other embodiments, coaxial or tri-axial leads are employed.

The connection can, by way of non-limiting example, be employed to transfer analogous signals ranging from 0 V to 5 V, in particular ranging from 0 V to 3.3 V, from the controller 16 to the transducer 4. The skilled person selects a connection between the controller 16 and the transducer 4 that is suitable to transfer electric signals at the aforementioned ultrasonic frequencies. The connection between the controller 16 and the ultrasonic transducer 4 may be unidirectional as well as bidirectional. Unidirectional connections reduce the complexity of the setup whilst bidirectional connections enable more versatile and more nuanced connectivity.

The controller 16 also is in operative communication with the ultrasonic transducer 5. In an embodiment, a two-wire lead is employed to couple the controller 16 and the ultrasonic transducer 5. In other embodiments, coaxial or tri-axial leads are employed.

The connection can, by way of non-limiting example, be employed to transfer analogous signals ranging from 0 V to 5 V, in particular from 0 V to 3.3 V, from the controller 16 to the transducer 5. The two-wire lead can, by way of non-limiting example, be employed to transfer analogous signals ranging from 0 V to 5 V, in particular from 0 V to 3.3 V, from the controller 16 to the transducer 5. The skilled person selects a connection between the controller 16 and the transducer 5 that is suitable to transfer electric signals at the aforementioned ultrasonic frequencies. The connection between the controller 16 and the ultrasonic transducer 5 may be unidirectional as well as bidirectional. Unidirectional connections reduce the complexity of the setup whilst bidirectional connections enable more versatile and more nuanced connectivity.

An analog-to-digital converter 17 reads analog signals from the ultrasonic transducer 5. The analog-to-digital converter 17 then forwards digital representations of such analog signals to the controller 16. An amplifier may be employed to amplify signals originating from the ultrasonic transducer 5. The amplifier would typically be connected in between the ultrasonic transducer 5 and the analog-to-digital converter 17. The skilled person selects an analog-to-digital 17 converter with a sufficient sampling rate such that ultrasonic signals at the aforementioned frequencies can be processed. Where necessary, the skilled person also selects an amplifier with a sufficient bandwidth such that ultrasonic signals at the aforementioned frequencies can be amplified.

The analog-to-digital converter 17 is, in an embodiment, an integral part of the controller 16. That is, the analog-to-digital converter 17 and the controller 16 are arranged on the same system-on-a-chip. Controllers 16 with built-in analog-to-digital converters 17 reduce the complexity of the setup.

A digital-to-analog converter 18 sends analog signals to the ultrasonic transducer 4. To that end, the digital-to-analog converter 18 receives digital representations of such analog signals from the controller 16. An amplifier may be employed to amplify signals to be forwarded to the ultrasonic transducer 4. The amplifier would typically be connected in between the ultrasonic transducer 4 and the digital-to-analog converter 18. The skilled person selects a digital-to-analog converter 18 converter with a sufficient range of output frequencies such that ultrasonic signals at the aforementioned frequencies can be processed. Where necessary, the skilled person also selects an amplifier with a sufficient bandwidth such that ultrasonic signals at the aforementioned frequencies can be amplified.

The digital-to-analog converter 18 is, in an embodiment, an integral part of the controller 16. That is, the digital-to-analog converter 18 and the controller 16 are arranged on the same system-on-a-chip. Controllers 16 with built-in digital-to-analog converters 18 reduce the complexity of the setup.

In an embodiment, the arc length dimension is larger than the outlet diameter dimension 12. In a particular embodiment, the arc length dimension is at least twice the outlet diameter dimension 12. According to an aspect, the arc length dimension is at least 2 mm, preferably at least 5 mm, more preferably at least 10 mm. Long arc length dimensions improve on linearity.

In an example not part of the invention, the profile of the flow restriction member 8 comprises a triangular segment; wherein the triangular segment has a first end and a second end, the second end being disposed opposite the first end, and a length dimension between the first end and the second end; wherein the flow channel 2 comprises an outlet port 11; wherein the flow channel 2 has a outlet diameter dimension 12 at its outlet port 11; and wherein the length dimension of the triangular segment is at least half the outlet diameter dimension 12. In an example, the length dimension of the triangular segment is larger than the outlet diameter dimension 12. In particular, the length dimension of the triangular segment is at least twice the outlet diameter dimension 12. According to an example, the length dimension of the triangular segment is at least 2 mm, preferably at least 5 mm, more preferably at least 10 mm. Long length dimensions of the triangular segment improve on linearity.

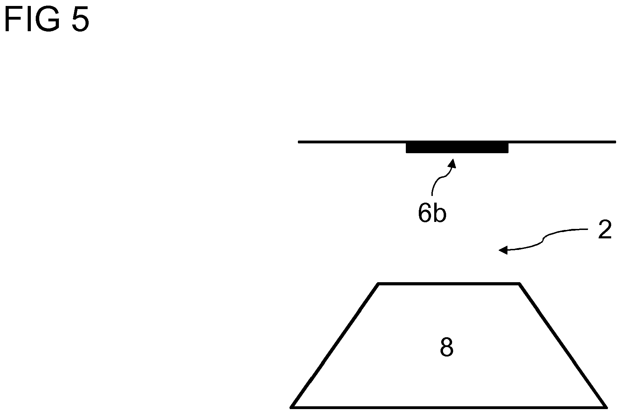

In an example not part of the invention, the flow restriction member 8 is trapezoidal and/or that the flow restriction member 8 has a trapezoidal profile and/or that the flow restriction member 8 has a trapezoidal cross-section. FIG 5 shows an example not part of the present invention with a trapezoidal flow restriction member 8.

In an example not part of the invention, the profile of the flow restriction member 8 comprises a rectangular segment; wherein the rectangular segment has a first end and a second end, the second end being disposed opposite the first end, and a length dimension between the first end and the second end; wherein the flow channel 2 comprises an outlet port 11; wherein the flow channel 2 has a outlet diameter dimension 12 at its outlet port 11; and wherein the length dimension of the rectangular segment is at least half the outlet diameter dimension 12. In an example, the length dimension of the rectangular segment is larger than the outlet diameter dimension 12. In particular, the length dimension of the rectangular segment is at least twice the outlet diameter dimension 12. According to an example, the length dimension of the rectangular segment is at least 2 mm, preferably at least 5 mm, more preferably at least 10 mm. Long length dimensions of the rectangular segment improve on linearity.

It should be understood that the foregoing relates only to certain embodiments of the disclosure and that numerous changes may be made therein without departing from the scope of the disclosure as defined by the following claims. It should also be understood that the disclosure is not restricted to the illustrated embodiments and that various modifications can be made within the scope of the following claims.

### Reference numerals

- 1: flow meter
- 2: flow channel
- 3: housing
- 4, 5: ultrasound transducers
- 6a, 6b, 6c: reflectors
- 7: W-shaped path
- 8: flow restriction member
- 9: tubular member
- 10a, 10b, 10c: apertures
- 11: outlet port
- 12: diameter dimension
- 13: diameter dimension
- 14: inlet port
- 15: arcuate segment
- 16: controller
- 17: analog-to-digital converter
- 18: digital-to-analog converter

## Claims

1. A flow meter (1) comprising:
a housing (3) and a flow channel (2) arranged inside the housing (3);
two ultrasonic transducers (4, 5) disposed along the flow channel (2) and arranged at a distance from one another, wherein the first ultrasonic transducer (4) is configured to emit an ultrasonic signal into the flow channel (2) and the second ultrasonic transducer (5) is configured to receive the ultrasonic signal emitted by the first ultrasonic transducer (4);
three reflectors (6a, 6b, 6c) arranged inside the flow channel (2), the three reflectors (6a, 6b, 6c) being configured to reflect the ultrasonic signal emitted by the first ultrasonic transducer (4) multiple times on its way to the second ultrasonic transducer (5) such that a W-shaped path (7) of the ultrasonic signal is formed;
wherein the flow channel (2) is formed by a tubular member (9) inside the housing (3);
wherein the tubular member (9) comprises a wall having an inner surface, the reflectors (6a, 6b, 6c) being arranged on the inner surface of the wall;
wherein the flow channel (2) comprises a flow restriction member (8) and an outlet port (11) having a first diameter dimension (12), the flow restriction member (8) being interposed between two out of the three reflectors (6a, 6b, 6c);
wherein the flow channel (2) has a second diameter dimension (13) at the flow restriction member (8); and
**characterized in that** the second diameter dimension (13) is less than sixty percent of the first diameter dimension (12); and **in that**
the W-shaped path (7) of the ultrasonic signal defines a plane; and **in that**
the flow restriction member (8) has a profile in the plane defined by the W-shaped path (7); and **in that**
the profile of the flow restriction member (8) comprises an arcuate segment (15); and **in that**
the arcuate segment (15) has a first end and a second end, the second end being disposed opposite the first end, and an arc length dimension between the first end and the second end; and **in that** the arc length dimension is at least half the first diameter dimension (12).

2. The flow meter (1) according to claim 1,
wherein the tubular member (9) comprises a polymeric portion; and
wherein manufacture of the tubular member (9) involves injection moulding.

3. The flow meter (1) according to any of the claims 1 or 2,
wherein the housing (3) comprises a polymeric portion.

4. The flow meter (1) according to any of the claims 1 to 3,
wherein the wall comprises at least one aperture (10a, 10b, 10c), the at least one aperture (10a, 10b, 10c) perforating the wall and being configured for insertion of at least one of the reflectors (6a, 6b, 6c) into the tubular member (9).

5. The flow meter (1) according to any of the claims 1 to 4,
wherein the wall comprises three apertures (10a, 10b, 10c), each aperture (10a, 10b, 10c) perforating the wall and being configured for insertion of one of the reflectors (6a, 6b, 6c) into the tubular member (9).

6. The flow meter (1) according to any of the claims 1 to 5,
wherein the tubular member (9) comprises an inside portion, the inner surface of the wall enveloping the inside portion of the tubular member (9); and
wherein the three reflectors (6a, 6b, 6c) are mounted to the inner surface of the wall.

7. The flow meter (1) according to any of the claims 1 to 6,
wherein the flow restriction member (8) protrudes from the inner surface of the wall into the tubular member (9).

8. The flow meter (1) according to any of the claims 1 to 7,
wherein the flow restriction member (8) extends between two out of the three reflectors (6a, 6b, 6c).

9. The flow meter (1) according to any of the claims 1 to 8,
wherein the flow channel (2) comprises an outlet port (11);
wherein the flow channel (2) comprises an inlet port (14), the inlet port (14) being arranged opposite the outlet port (11) and a fluid path extending from the inlet port (14) to the outlet port (11);
wherein the three reflectors (6a, 6b, 6c) comprise a first reflector (6c), the first reflector (6c) being disposed closest to the outlet port (11) amongst the three reflectors (6a, 6b, 6c);
wherein the three reflectors (6a, 6b, 6c) comprise a second reflector (6a), the second reflector (6a) being disposed closest to the inlet port (14) amongst the three reflectors (6a, 6b, 6c); and
wherein the flow restriction member (8) is interposed between the first reflector (6c) and the second reflector (6a).

10. The flow meter (1) according to any of the claims 1 to 9,
wherein the three reflectors (6a, 6b, 6c) comprise a third reflector (6b), the third reflector (6b) being disposed centrally in between the outlet port (11) and the inlet port (14); and
wherein the flow restriction member (8) is arranged opposite the third reflector (6b).

11. The flow meter (1) according to any of the claims 1 to 10,
the flow meter (1) additionally comprising a controller (16), the controller (16) comprising an analog-to-digital converter (17), the analog-to-digital converter (17) being an integral part of the controller (16);
wherein the controller (16) is in operative communication with the second ultrasonic transducer (5) via the analog-to-digital converter (17) and is in operative communication with the first ultrasonic transducer (4);
wherein the first ultrasonic transducer (4) is configured to:
receive a trigger signal from the controller (16); and
emit an ultrasonic signal into the flow channel (2) in response to the trigger signal;
wherein the second ultrasonic transducer (5) is configured to:
produce a feedback signal in response to receiving the ultrasonic signal emitted by the first ultrasonic transducer (4); and
send the feedback signal to the controller (16);
wherein the controller (16) is configured to:
send the trigger signal to the first ultrasonic transducer (4);
read via the analog-to-digital converter (17) the feedback signal from the second ultrasonic transducer (5);
determine a flow rate through the flow meter (1) as a function of the feedback signal.

12. The flow meter (1) according to claim 11,
wherein the controller (16) additionally comprises a digital-to-analog converter (18); wherein the controller (16) is in operative communication with the first ultrasonic transducer (4) via the digital-to-analog converter (18); and
wherein the controller (16) is configured to:
send the trigger signal to the first ultrasonic transducer (4) via the digital-to-analog converter (18).

13. The flow meter (1) according to any of the claims 11 to 12,
wherein the controller (16) comprises a timer unit;
wherein the controller (16) is configured to:
produce a feedback timestamp value associated with the feedback signal using the timer unit; and
determine a flow rate through the flow meter (1) as a function of the feedback timestamp value.

14. The flow meter (1) according to claim 13, wherein the controller (16) is configured to:
produce a trigger timestamp value associated with the trigger signal using the timer unit; and
determine a flow rate through the flow meter (1) as a function of the trigger timestamp value and as a function of the feedback timestamp value.

## Patentansprüche

1. Durchflussmessgerät (1), das Folgendes umfasst:
ein Gehäuse (3) und einen in dem Gehäuse (3) angeordneten Durchflusskanal (2),
zwei Ultraschallwandler (4, 5), die in einem Abstand zueinander am Durchflusskanal (2) angeordnet sind, wobei der erste Ultraschallwandler (4) so konfiguriert ist, dass er ein Ultraschallsignal in den Durchflusskanal (2) aussendet, und der zweite Ultraschallwandler (5) so konfiguriert ist, dass er das von dem ersten Ultraschallwandler (4) ausgesendete Ultraschallsignal empfängt,
drei Reflektoren (6a, 6b, 6c), die in dem Durchflusskanal (2) angeordnet sind, wobei die drei Reflektoren (6a, 6b, 6c) so konfiguriert sind, dass sie das von dem ersten Ultraschallwandler (4) ausgesendete Ultraschallsignal auf seinem Weg zu dem zweiten Ultraschallwandler (5) mehrmals reflektieren, so dass ein W-förmiger Signalweg (7) für das Ultraschallsignal entsteht,
wobei der Durchflusskanal (2) von einem rohrförmigen Element (9) in dem Gehäuse (3) gebildet wird,
wobei das rohrförmige Element (9) eine Wand mit einer Innenfläche umfasst und die Reflektoren (6a, 6b, 6c) an der Innenfläche der Wand angeordnet sind,
wobei der Durchflusskanal (2) ein
Durchflussbegrenzungselement (8) und eine Auslassöffnung (11) mit einem ersten Durchmessermaß (12) umfasst und das Durchflussbegrenzungselement (8) zwischen zwei der drei Reflektoren (6a, 6b, 6c) angeordnet ist,
wobei der Durchflusskanal (2) an dem
Durchflussbegrenzungselement (8) ein zweites Durchmessermaß (13) aufweist und
**dadurch gekennzeichnet, dass** das zweite Durchmessermaß (13) weniger als sechzig Prozent des ersten Durchmessermaßes (12) beträgt und
dass der W-förmige Weg (7) für das Ultraschallsignal eine Ebene definiert und
dass das Durchflussbegrenzungselement (8) ein Profil in der von dem W-förmigen Weg (7) definierten Ebene aufweist und
dass das Profil des Durchflussbegrenzungselements (8) ein bogenförmiges Segment (15) umfasst und
dass das bogenförmige Segment (15) ein erstes und ein zweites Ende aufweist, wobei das zweite Ende gegenüber dem ersten Ende angeordnet ist, und ein Bogenlängenmaß zwischen dem ersten und dem zweiten Ende aufweist und
dass das Bogenlängenmaß mindestens die Hälfte des ersten Durchmessermaßes (12) beträgt.

2. Das Durchflussmessgerät (1) nach Anspruch 1,
wobei das rohrförmige Element (9) einen Polymerabschnitt umfasst und
wobei das Fertigen des rohrförmigen Elements (9) Spritzgießen umfasst.

3. Das Durchflussmessgerät (1) nach einem der Ansprüche 1 oder 2,
wobei das Gehäuse (3) einen Polymerabschnitt umfasst.

4. Das Durchflussmessgerät (1) nach einem der Ansprüche 1 bis 3,
wobei die Wand mindestens ein Loch (10a, 10b, 10c) umfasst, das die Wand durchdringt und zum Einsetzen mindestens eines der Reflektoren (6a, 6b, 6c) in das rohrförmige Element (9) konfiguriert ist.

5. Das Durchflussmessgerät (1) nach einem der Ansprüche 1 bis 4,
wobei die Wand mindestens drei Löcher (10a, 10b, 10c) umfasst, von denen jedes die Wand durchdringt und zum Einsetzen eines der Reflektoren (6a, 6b, 6c) in das rohrförmige Element (9) konfiguriert ist.

6. Das Durchflussmessgerät (1) nach einem der Ansprüche 1 bis 5,
wobei das rohrförmige Element (9) einen Innenabschnitt umfasst und die Innenfläche der Wand den Innenabschnitt des rohrförmigen Elements (9) umgibt und
wobei die drei Reflektoren (6a, 6b, 6c) an der Innenfläche der Wand angebracht sind.

7. Das Durchflussmessgerät (1) nach einem der Ansprüche 1 bis 6,
wobei das Durchflussbegrenzungselement (8) von der Innenfläche der Wand aus in das rohrförmige Element (9) ragt.

8. Das Durchflussmessgerät (1) nach einem der Ansprüche 1 bis 7,
wobei sich das Durchflussbegrenzungselement (8) zwischen zwei von drei Reflektoren (6a, 6b, 6c) erstreckt.

9. Das Durchflussmessgerät (1) nach einem der Ansprüche 1 bis 8,
wobei der Durchflusskanal (2) eine Auslassöffnung (11) umfasst,
wobei der Durchflusskanal (2) eine Einlassöffnung (14) umfasst, die gegenüber der Auslassöffnung (11) angeordnet ist, und einen Fluidweg, der sich von der Einlassöffnung (14) aus zur Auslassöffnung (11) erstreckt,
wobei die drei Reflektoren (6a, 6b, 6c) einen ersten Reflektor (6c) umfassen, der unter den drei Reflektoren (6a, 6b, 6c) am nächsten an der Auslassöffnung (11) angeordnet ist,
wobei die drei Reflektoren (6a, 6b, 6c) einen zweiten Reflektor (6a) umfassen, der unter den drei Reflektoren (6a, 6b, 6c) am nächsten an der Einlassöffnung (14) angeordnet ist, und
wobei das Durchflussbegrenzungselement (8) zwischen dem ersten Reflektor (6c) und dem zweiten Reflektor (6a) angeordnet ist.

10. Das Durchflussmessgerät (1) nach einem der Ansprüche 1 bis 9,
wobei die drei Reflektoren (6a, 6b, 6c) einen dritten Reflektor (6b) umfassen, der in der Mitte zwischen der Auslassöffnung (11) und der Einlassöffnung (14) angeordnet ist, und
wobei das Durchflussbegrenzungselement (8) gegenüber dem dritten Reflektor (6b) angeordnet ist.

11. Das Durchflussmessgerät (1) nach einem der Ansprüche 1 bis 10,
wobei das Durchflussmessgerät (1) zusätzlich eine Steuerung (16) umfasst, die einen Analog-Digital-Wandler (17) umfasst, der ein integraler Bestandteil der Steuerung (16) ist,
wobei die Steuerung (16) mit dem zweiten Ultraschallwandler (5) über den Analog-Digital-Wandler (17) und mit dem ersten Ultraschallwandler (4) in Betriebskommunikation steht,
wobei der erste Ultraschallwandler (4) so konfiguriert ist, dass er:
ein Auslösesignal von der Steuerung (16) empfängt und
als Reaktion auf das Auslösesignal ein Ultraschallsignal in den Durchflusskanal (2) aussendet,
wobei der zweite Ultraschallwandler (5) so konfiguriert ist, dass er:
als Reaktion auf das Empfangen des von dem ersten Ultraschallwandler (4) ausgesendeten Ultraschallsignals ein Rückkopplungssignal erzeugt und
das Rückkopplungssignal zur Steuerung (16) sendet, wobei die Steuerung (16) so konfiguriert ist, dass sie:
das Auslösesignal zu dem ersten Ultraschallwandler (4) sendet,
über den Analog-Digital-Wandler (17) das Rückkopplungssignal aus dem zweiten Ultraschallwandler (5) ausliest,
in Abhängigkeit von dem Rückkopplungssignal eine Durchflussgeschwindigkeit durch das Durchflussmessgerät (1) ermittelt.

12. Das Durchflussmessgerät (1) nach Anspruch 11,
wobei die Steuerung (16) zusätzlich einen Digital-Analog-Wandler (18) umfasst,
wobei die Steuerung (16) über den Digital-Analog-Wandler (18) mit dem ersten Ultraschallwandler (4) in Betriebskommunikation steht und
wobei die Steuerung (16) so konfiguriert ist, dass sie:
das Auslösesignal über den Digital-Analog-Wandler (18) zu dem ersten Ultraschallwandler (4) sendet.

13. Das Durchflussmessgerät (1) nach einem der Ansprüche 11 und 12,
wobei die Steuerung (16) eine Timer-Einheit umfasst,
wobei die Steuerung (16) so konfiguriert ist, dass sie:
unter Verwendung der Timer-Einheit einen mit dem Rückkopplungssignal verknüpften Rückkopplungszeitstempelwert erzeugt und
in Abhängigkeit von dem Rückkopplungszeitstempelwert eine Durchflussgeschwindigkeit durch das Durchflussmessgerät (1) ermittelt.

14. Das Durchflussmessgerät (1) nach Anspruch 13, wobei die Steuerung (16) so konfiguriert ist, dass sie:
unter Verwendung der Timer-Einheit einen mit dem Auslösesignal verknüpften Auslösezeitstempelwert erzeugt und
in Abhängigkeit von dem Auslösezeitstempelwert und dem Rückkopplungszeitstempelwert eine Durchflussgeschwindigkeit durch das Durchflussmessgerät (1) ermittelt.

## Revendications

1. Débitmètre (1) comprenant :
un boîtier (3) et un canal d'écoulement (2) agencé à l'intérieur du boîtier (3) ;
deux transducteurs à ultrasons (4, 5) disposés le long du canal d'écoulement (2) et agencés à une certaine distance l'un de l'autre, dans lequel le premier transducteur à ultrasons (4) est configuré afin d'émettre un signal à ultrasons dans le canal d'écoulement (2) et le second transducteur à ultrasons (5) est configuré afin de recevoir le signal à ultrasons émis par le premier transducteur à ultrasons (4) ;
trois réflecteurs (6a, 6b, 6c) agencés à l'intérieur du canal d'écoulement (2), les trois réflecteurs (6a, 6b, 6c) étant configurés afin de refléter le signal à ultrasons émis par le premier transducteur à ultrasons (4) de multiples fois sur son chemin vers le second transducteur à ultrasons (5) de sorte qu'un chemin en forme de W (7) du signal à ultrasons soit formé ;
dans lequel le canal d'écoulement (2) est formé par un élément tubulaire (9) à l'intérieur du boîtier (3) ;
dans lequel l'élément tubulaire (9) comprend une paroi présentant une surface intérieure, les réflecteurs (6a, 6b, 6c) étant agencés sur la surface intérieure de la paroi ;
dans lequel le canal d'écoulement (2) comprend un élément de restriction de flux (8) et un orifice de sortie (11) présentant une première dimension en diamètre (12), l'élément de restriction de flux (8) étant intercalé entre deux des trois réflecteurs (6a, 6b, 6c) ;
dans lequel le canal d'écoulement (2) présente une seconde dimension en diamètre (13) au niveau de l'élément de restriction de flux (8) ; et
**caractérisé en ce que** la seconde dimension en diamètre (13) est inférieure à soixante pour cent de la première dimension en diamètre (12) ; et **en ce que**
le chemin en forme de W (7) du signal à ultrasons définit un plan ; et **en ce que**
l'élément de restriction de flux (8) présente un profil dans le plan défini par le chemin en forme de W (7) ; et **en ce que**
le profil de l'élément de restriction de flux (8) comprend un segment arqué (15) ; et **en ce que**
le segment arqué (15) présente une première extrémité et une seconde extrémité disposées à l'opposé de la première extrémité, et une dimension de longueur d'arc entre la première extrémité et la seconde extrémité ; et **en ce que**
la dimension de longueur d'arc représente au moins la moitié de la première dimension en diamètre (12).

2. Le débitmètre (1) selon la revendication 1,
dans lequel l'élément tubulaire (9) comprend une partie polymère ; et
dans lequel la fabrication de l'élément tubulaire (9) implique un moulage par injection.

3. Le débitmètre (1) selon l'une quelconque des revendications 1 ou 2,
dans lequel le boîtier (3) comprend une partie polymère.

4. Le débitmètre (1) selon l'une quelconque des revendications 1 à 3,
dans lequel la paroi comprend au moins une ouverture (10a, 10b, 10c), la au moins une ouverture (10a, 10b, 10c) perforant la paroi et étant configurée pour l'insertion d'au moins un des réflecteurs (6a, 6b, 6c) dans l'élément tubulaire (9).

5. Le débitmètre (1) selon l'une quelconque des revendications 1 à 4,
dans lequel la paroi comprend trois ouvertures (10a, 10b, 10c), chaque ouverture (10a, 10b, 10c) perforant la paroi et étant configurée pour l'insertion d'un des réflecteurs (6a, 6b, 6c) dans l'élément tubulaire (9).

6. Le débitmètre (1) selon l'une quelconque des revendications 1 à 5,
dans lequel l'élément tubulaire (9) comprend une partie interne, la surface intérieure de la paroi enveloppant la partie interne de l'élément tubulaire (9) ; et
dans lequel les trois réflecteurs (6a, 6b, 6c) sont montés sur la surface intérieure de la paroi.

7. Le débitmètre (1) selon l'une quelconque des revendications 1 à 6,
dans lequel l'élément de restriction de flux (8) ressort de la surface intérieure de la paroi dans l'élément tubulaire (9).

8. Le débitmètre (1) selon l'une quelconque des revendications 1 à 7,
dans lequel l'élément de restriction de flux (8) s'étend entre deux des trois réflecteurs (6a, 6b, 6c).

9. Le débitmètre (1) selon l'une quelconque des revendications 1 à 8,
dans lequel le canal d'écoulement (2) comprend un orifice de sortie (11) ;
dans lequel le canal d'écoulement (2) comprend un orifice d'entrée (14), l'orifice d'entrée (14) étant agencé à l'opposé de l'orifice de sortie (11) et un chemin d'écoulement s'étendant entre l'orifice d'entrée (14) et l'orifice de sortie (11) ;
dans lequel les trois réflecteurs (6a, 6b, 6c) comprennent un premier réflecteur (6c), le premier réflecteur (6c) étant disposé le plus près de l'orifice de sortie (11) parmi les trois réflecteurs (6a, 6b, 6c) ;
dans lequel les trois réflecteurs (6a, 6b, 6c) comprennent un deuxième réflecteur (6a), le deuxième réflecteur (6a) étant disposé le plus près de l'orifice d'entrée (14) parmi les trois réflecteurs (6a, 6b, 6c) ; et
dans lequel l'élément de restriction de flux (8) est intercalé entre le premier réflecteur (6c) et le deuxième réflecteur (6a).

10. Le débitmètre (1) selon l'une quelconque des revendications 1 à 9,
dans lequel les trois réflecteurs (6a, 6b, 6c) comprennent un troisième réflecteur (6b), le troisième réflecteur (6b) étant disposé au centre entre l'orifice de sortie (11) et l'orifice d'entrée (14) ; et
dans lequel l'élément de restriction de flux (8) est agencé à l'opposé du troisième réflecteur (6b).

11. Le débitmètre (1) selon l'une quelconque des revendications 1 à 10,
le débitmètre (1) comprenant en outre un système de commande (16), le système de commande (16) comprenant un convertisseur analogique à numérique (17), le convertisseur analogique à numérique (17) étant partie intégrante du système de commande (16) ;
dans lequel le système de commande (16) est en communication opérationnelle avec le second transducteur à ultrasons (5) via le convertisseur analogique à numérique (17) et est en communication opérationnelle avec le premier transducteur à ultrasons (4) ;
dans lequel le premier transducteur à ultrasons (4) est configuré afin de :
recevoir un signal d'enclenchement du système de commande (16) ; et
émettre un signal à ultrasons dans le canal d'écoulement (2) en réponse au signal d'enclenchement ;
dans lequel le second transducteur à ultrasons (5) est configuré afin de :
produire un signal de retour en réponse à la réception du signal à ultrasons émis par le premier transducteur à ultrasons (4) ; et
envoyer le signal de retour au système de commande (16) ; dans lequel le système de commande (16) est configuré afin de :
envoyer le signal d'enclenchement au premier transducteur à ultrasons (4) ;
lire, par le biais du convertisseur analogique à numérique (17), le signal de retour provenant du second transducteur à ultrasons (5) ;
déterminer un débit à travers le débitmètre (1) en fonction du signal de retour.

12. Le débitmètre (1) selon la revendication 11,
dans lequel le système de commande (16) comprend en outre un convertisseur numérique à analogique (18) ;
dans lequel le système de commande (16) est en communication opérationnelle avec le premier transducteur à ultrasons (4) par le biais du convertisseur numérique à analogique (18) ; et
dans lequel le système de commande (16) est configuré afin de :
envoyer le signal d'enclenchement au premier transducteur à ultrasons (4) par le biais du convertisseur numérique à analogique (18).

13. Le débitmètre (1) selon l'une quelconque des revendications 11 à 12,
dans lequel le système de commande (16) comprend une unité de temporisateur ;
dans lequel le système de commande (16) est configuré afin de :
produire une valeur d'horodatage de retour associée au signal de retour en utilisant l'unité de temporisateur ; et
déterminer un débit à travers le débitmètre (1) en fonction de la valeur d'horodatage de retour.

14. Le débitmètre (1) selon la revendication 13, dans lequel le système de commande (16) est configuré afin de :
produire une valeur d'horodatage d'enclenchement associée au signal d'enclenchement en utilisant l'unité de temporisateur ; et
déterminer un débit à travers le débitmètre (1) en fonction de la valeur d'horodatage d'enclenchement et en fonction de la valeur d'horodatage de retour.
